# EUROPÄISCHE PATENTSCHRIFT

(11) **EP 3 458 788 B1**
(45) Veröffentlichungstag und Bekanntmachung des Hinweises auf die Patenterteilung: **07.04.2021**
(21) Anmeldenummer: 17705313.9
(22) Anmeldetag: 15.02.2017
(51) Int. Cl.: F28D 7/00, F25B 47/02, B60H 1/00, B60H 1/32

(54) **VERFAHREN ZUM BETREIBEN EINER KLIMAANLAGE EINES FAHRZEUGS**
METHOD FOR OPERATING AN AIR-CONDITIONING SYSTEM OF A VEHICLE
PROCÉDÉ PERMETTANT DE FAIRE FONCTIONNER UN SYSTÈME DE CLIMATISATION D'UN VÉHICULE

(30) Priorität: 18.05.2016 DE 102016006135
(43) Veröffentlichungstag der Anmeldung: 27.03.2019
(73) Patentinhaber: Daimler AG, 70372 Stuttgart (DE)
(72) Erfinder: KLAMPFL, Johannes, 89165 Dietenheim (DE)
(74) Vertreter: JENSEN & SON
(86) Internationale Anmeldenummer: PCT/EP2017/000213
(87) Internationale Veröffentlichungsnummer: WO 2017/198321

(56) Entgegenhaltungen:
- DE-A1- 10 254 109
- DE-A1-102014 203 895

## Beschreibung

Die Erfindung betrifft ein Verfahren zum Betreiben einer Klimaanlage eines Fahrzeugs gemäß dem Oberbegriff von Patenanspruch 1.

Ein solches Verfahren zum Betreiben einer Klimaanlage eines Fahrzeugs ist beispielsweise bereits der DE 37 41 288 A1 als bekannt zu entnehmen. Die Klimaanlage ist dabei sowohl in einem Wärmepumpenbetrieb als Wärmepumpe zum Beheizen des Innenraums des Fahrzeugs als auch in einem Kühlbetrieb als Kältemaschine zum Kühlen des Innenraums betreibbar. In dem Wärmepumpenbetrieb wird beispielsweise Luft, welche dem Innenraum zugeführt wird, mittels der Wärmepumpe erwärmt, wodurch der Innenraum beheizt beziehungsweise erwärmt werden kann. In dem Kühlbetrieb wird beispielsweise die dem Innenraum zuzuführende Luft mittels der Kältemaschine gekühlt, wodurch der Innenraum gekühlt werden kann.

Die Klimaanlage weist dabei einen Verdichter auf, mittels welchem ein Kältemittel der Klimaanlage in dem Wärmepumpenbetrieb und in dem Kühlbetrieb verdichtet wird. Ferner umfasst die Klimaanlage wenigstens einen ersten Wärmetauscher, welcher in dem Wärmepumpenbetrieb als Verdampfer zum Verdampfen des Kältemittels und in dem Kühlbetrieb als Kühleinrichtung zum Kühlen des Kältemittels betrieben wird. Ferner umfasst die Klimaanlage wenigstens einen zweiten Wärmetauscher, welcher in dem Wärmepumpenbetrieb als Kühleinrichtung zum Kühlen des Kältemittels und in dem Kühlbetrieb als Verdampfer des Kältemittels betrieben wird.

Außerdem ist aus der DE 102 54 109 A1 eine kombinierte Kühl- und Heizvorrichtung mit einem gemeinsam genutzten Gaskühler bekannt. Des Weiteren ist der DE 10 2014 203 895 A1 eine Kälteanlage als bekannt zu entnehmen.

Aufgabe der vorliegenden Erfindung ist es, ein Verfahren der eingangs genannten Art derart weiterzuentwickeln, dass ein besonders vorteilhafter und insbesondere effizienter Betrieb realisierbar ist.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um ein Verfahren der im Oberbegriff des Patentanspruchs 1 angegebenen Art derart weiterzuentwickeln, dass ein besonders vorteilhafter und insbesondere effizienter Betrieb der Klimaanlage realisierbar ist, ist es erfindungsgemäß vorgesehen, dass die Klimaanlage in einem von dem Wärmepumpenbetrieb und von dem Kühlbetrieb unterschiedlichen Abtaubetrieb betrieben wird, in welchem der jeweilige Wärmetauscher parallel als Kühleinrichtung zum Kühlen des Kältemittels und als Verdampfer zum Verdampfen des Kältemittels betrieben wird.

Der Erfindung liegt dabei insbesondere folgende Erkenntnis zugrunde: In dem Wärmepumpenbetrieb wird mittels des ersten Wärmetauschers das Kältemittel verdampft, sodass das Kältemittel über den ersten Wärmetauscher Wärme von einem Medium aufnehmen kann. Bei diesem Medium handelt es sich beispielsweise um Luft, insbesondere um Umgebungsluft, die beispielsweise den ersten Wärmetauscher umströmt. Mittels des ersten Wärmetauschers wird somit das Kältemittel in dem Wärmepumpenbetrieb erwärmt, indem Wärme von dem genannten Medium über den ersten Wärmetauscher an das Kältemittel übergeht. Hierdurch kühlt sich der erste Wärmetauscher, insbesondere außenumfangsseitig, ab, sodass es zu einer Vereisung des ersten Wärmetauschers kommen kann. Unter dieser Vereisung ist zu verstehen, dass sich an dem ersten Wärmetauscher, insbesondere an dessen Außenseite, Eis bildet, da sich der erste Wärmetauscher während des Wärmepumpenbetriebs stark abkühlen kann.

Um dieser Vereisung des ersten Wärmetauschers entgegenzuwirken, kann beispielsweise ein Abtauvorgang durchgeführt werden, in dessen Rahmen der erste Wärmetauscher erwärmt wird beziehungsweise eine Erwärmung des ersten Wärmetauschers zugelassen wird. Dadurch kann beispielsweise Eis, welches sich an dem ersten Wärmetauscher niedergesetzt hat, aufgeschmolzen werden. Zur Realisierung dieses Abtauvorgangs kann vorgesehen sein, dass die Klimaanlage nicht mehr in dem Wärmepumpenbetrieb, sondern in dem Kühlbetrieb betrieben wird, in welchem der erste Wärmetauscher als Kühleinrichtung zum Kühlen des Kältemittels betrieben wird. Dabei wird das Kältemittel beispielsweise derart gekühlt, dass Wärme von dem Kältemittel über den ersten Wärmetauscher an das zuvor genannte Medium übergeht. Dadurch wird der erste Wärmetauscher erwärmt. Dieser Abtauvorgang entspricht somit im Grunde dem Kühlbetrieb der Klimaanlage. Dabei kann die Durchführung des Abtauvorgangs und somit des Kühlbetriebs erforderlich sein und somit durchgeführt werden, obwohl eigentlich der Innenraum beheizt werden soll, das heißt obwohl eigentlich der Wärmepumpenbetrieb gewünscht ist, um den Innenraum zu beheizen.

Ist dies der Fall, das heißt wird der Abtauvorgang durchgeführt, obwohl der Innenraum beheizt werden soll, so wird beispielsweise - um übermäßige Komforteinbußen für sich im Innenraum aufhaltende Insassen zu vermeiden - einer übermäßig starken Abbeziehungsweise Auskühlung des Innenraums dadurch entgegengewirkt, dass ein sogenanntes Gegenheizen durchgeführt wird. Unter diesem Gegenheizen ist beispielsweise zu verstehen, dass eine Heizleistung beziehungsweise Wärme zum Beheizen des Innenraums nicht etwa von der Wärmepumpe beziehungsweise von der Umgebungsluft, sondern von einer anderen Energiequelle bereitgestellt wird. In dem Wärmepumpenbetrieb kann Wärme des zuvor genannten Mediums besonders energiegünstig genutzt werden, um den Innenraum zu beheizen. Da die Klimaanlage in dem Abtauvorgang üblicherweise nicht als Wärmepumpe betrieben wird, steht die Wärme des Mediums während des Abtauvorgangs nicht zum Beheizen des Innenraums zur Verfügung. Somit muss auf die zuvor genannte, andere Energie- oder Wärmequelle zurückgegriffen werden. Dies führt zu einem energieintensiven Betrieb. Üblicherweise kommt ein sogenannter Innenwärmetauscher zum Einsatz, über welchen beispielsweise dem Innenraum zuzuführende Luft derart erwärmt wird, dass über den Innenwärmetauscher ein Wärmeübergang von dem in dem Wärmepumpenbetrieb über erwärmten Kältemittel über den Innenwärmetauscher an die dem Innenraum zuzuführende Luft erwärmt wird. Beispielsweise ist der Innenwärmetauscher der zweite Wärmetauscher. Da - wie zuvor beschrieben - während des Abtauvorgangs der Wärmepumpenbetrieb nicht durchgeführt wird beziehungsweise nicht zur Verfügung steht, kann auch die dem Innenraum zuzuführende Luft über den Innenwärmetauscher nicht oder nicht hinreichend erwärmt werden, sodass beispielsweise während des Abtauvorgangs und somit während des Kühlbetriebs der Klimaanlage an dem Innenwärmetauscher unerwünschte Kälte entsteht.

Um dabei eine unerwünschte Ab- beziehungsweise Auskühlung des Innenraums zu vermeiden, muss diese an dem Innenwärmetauscher entstehende Kälte durch das zuvor genannte Gegenheizen energieintensiv weggeheizt werden. Hierzu ist beispielsweise eine Warmwassererzeugung als Wärmequelle erforderlich, wobei im Rahmen der Warmwassererzeugung beispielsweise Wasser beziehungsweise eine Flüssigkeit mittels eines Heizgeräts, insbesondere mittels eines kraftstoffbetriebenen Heizgeräts und beispielsweise mittels eines dieselbetriebenen Heizgeräts, oder aber mittels eines elektrischen Bremswiderstands erwärmt wird. Diese Warmwassererzeugung wird somit beispielsweise als die zuvor genannte Wärmequelle genutzt, um während des Abtauvorgangs eine übermäßige Abkühlung des Innenraums zu verhindern. Das Gegenheizen ist somit üblicherweise besonders energieintensiv, was nun jedoch mittels des erfindungsgemäßen Verfahrens vermieden werden kann. Mittels des erfindungsgemäßen Verfahrens kann der Gegenheizbedarf reduziert oder zumindest gering gehalten werden, sodass sich ein besonders energieeffizienter Betrieb der Klimaanlage realisieren lässt. Ferner kann ein übermäßiges Ab- beziehungsweise Auskühlen des Innenraums vermieden werden, sodass sich ein besonders hoher Komfort für sich im Innenraum aufhaltende Insassen realisieren lässt. Mit anderen Worten ermöglicht es der erfindungsgemäße Abtaubetrieb, einer Vereisung des ersten Wärmetauschers und/oder zweiten Wärmetauschers entgegenzuwirken, ohne dass es zu einer übermäßigen Beeinflussung einer gewünschten, im Innenraum herrschenden Temperatur kommt. Somit können übermäßige Komforteinbußen verhindert werden. Im Rahmen des erfindungsgemäßen Verfahrens ist es vorgesehen, dass die Wärmetauscher in Relation zueinander parallel betrieben werden. Ferner wird der jeweilige Wärmetauscher für sich betrachtet parallel als Kühleinrichtung zum Kühlen des Kältemittels und als Verdampfer zum Verdampfen des Kältemittels betrieben. Durch diesen parallelen Betrieb des jeweiligen Wärmetauschers ist es möglich, eine übermäßige Abkühlung des Innenwärmetauschers zu vermeiden und dabei den beispielsweise als Außenwärmetauscher ausgebildeten ersten Wärmetauscher hinreichend zu erwärmen, sodass einer etwaigen Vereisung des ersten Wärmetauschers effektiv entgegengewirkt werden kann. Der zuvor genannte Innenwärmetauscher ist dabei beispielsweise der zweite Wärmetauscher, welcher in dem Wärmepumpenbetrieb als Kühleinrichtung zum Kühlen des Kältemittels und in dem Kühlbetrieb als Verdampfer zum Verdampfen des Kältemittels betrieben wird.

Handelt es sich bei dem Kältemittel beispielsweise um ein konventionelles Kältemittel, so fungiert die jeweilige Kühleinrichtung beispielsweise als Kondensator zum Kondensieren des Kältemittels. Alternativ ist es denkbar, dass das Kältemittel Kohlendioxid (CO2) ist, sodass die jeweilige Kühleinrichtung beispielsweise als Gaskühler fungiert.

Außerdem ist es vorgesehen, dass das Kältemittel in dem Abtaubetrieb zumindest einen jeweiligen ersten Teilbereich und zumindest einen jeweiligen zweiten Teilbereich des jeweiligen Wärmetauschers durchströmt, wobei der jeweilige erste Teilbereich in dem Abtaubetrieb als Kühleinrichtung zum Kühlen des Kältemittels betrieben wird, und wobei der jeweilige zweite Teilbereich in dem Abtaubetrieb als Verdampfer zum Verdampfen des Kältemittels parallel zu dem jeweiligen ersten Teilbereich betrieben wird.

Außerdem ist es erfindungsgemäß vorgesehen, dass in dem Abtaubetrieb das Kältemittel den ersten Teilbereich des ersten Wärmetauschers und den zweiten Teilbereich des zweiten Wärmetauschers mit einem Massenstrom und den zweiten Teilbereich des ersten Wärmetauschers und den ersten Teilbereich des zweiten Wärmetauschers mit einem von dem ersten Massenstrom unterschiedlichen zweiten Massenstrom durchströmt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer Klimaanlage eines Fahrzeugs, wobei in Fig. 1 ein Kühl- oder Klimabetrieb der Klimaanlage veranschaulicht ist; und
- Fig. 2: eine weitere schematische Darstellung der Klimaanlage, wobei in Fig. 2 ein Wärmepumpenbetrieb der Klimaanlage veranschaulicht ist.

In den Fig. sind gleiche oder funktionsgleiche Elemente mit gleichen Bezugszeichen versehen.

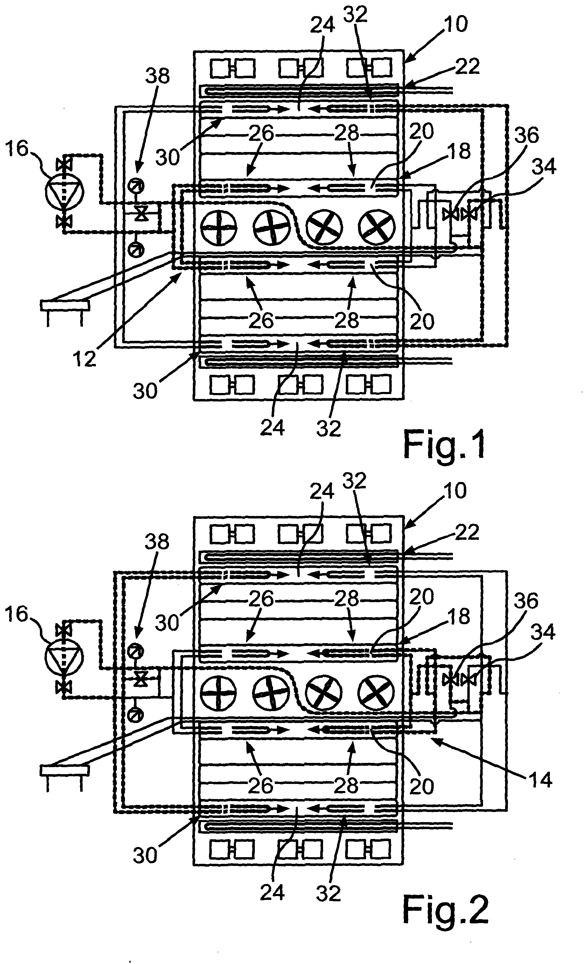

Fig. 1 zeigt in einer schematischen Darstellung eine im Ganzen mit 10 bezeichnete Klimaanlage für ein Fahrzeug, insbesondere für einen Kraftwagen wie beispielsweise einen Personenkraftwagen. Wie im Folgenden noch genauer erläutert wird, ist die Klimaanlage 10 in einem in Fig. 2 veranschaulichten Wärmepumpenbetrieb als Wärmepumpe zum Beheizen des Innenraums des Fahrzeugs betreibbar. Ferner ist die Klimaanlage 10 in einem in Fig. 1 veranschaulichten Kühlbetrieb als Kältemaschine zum Kühlen des Innenraums betreibbar. Der Kühlbetrieb wird auch als Klimabetrieb bezeichnet. In dem Kühlbetrieb wird mittels der Klimaanlage beispielsweise Luft, welche dem Innenraum zugeführt wird, gekühlt, sodass der Innenraum insgesamt gekühlt werden kann. In dem Wärmepumpenbetrieb wird beispielsweise mittels der Klimaanlage 10 die dem Innenraum zuzuführende Luft erwärmt, sodass der Innenraum erwärmt beziehungsweise beheizt werden kann.

Die Klimaanlage 10 weist dabei einen von einem Kältemittel durchströmbaren ersten Kältemittelkreislauf 12 sowie einen von dem Kältemittel durchströmbaren zweiten Kältemittelkreislauf 14 auf. Ferner umfasst die Klimaanlage einen den Kältemittelkreisläufen 12 und 14 gemeinsamen Verdichter 16, mittels welchem das Kältemittel verdichtet wird. Mittels des Verdichters 16 wird das Kältemittel sowohl in dem Wärmepumpenbetrieb als auch in dem Kühlbetrieb verdichtet. Die Klimaanlage 10 umfasst ferner eine erste Wärmetauschereinrichtung 18 mit zwei ersten Wärmetauschern 20, welche in dem Wärmepumpenbetrieb als Verdampfer zum Verdampfen des Kältemittels und in dem Kühlbetrieb als Kühleinrichtung zum Kühlen des Kältemittels betrieben werden. Ferner umfasst die Klimaanlage 10 eine zweite Wärmetauschereinrichtung 22 mit zwei zweiten Wärmetauschern 24, welche in dem Wärmepumpenbetrieb als Kühleinrichtungen zum Kühlen des Kältemittels und in dem Kühlbetrieb als Verdampfer zum Verdampfen des Kältemittels betrieben werden. Beispielsweise handelt es sich bei dem Kältemittel um Kohlendioxid (CO2), sodass die jeweilige Kühleinrichtung als Gaskühler fungiert.

Um nun einen besonders vorteilhaften und insbesondere effizienten Betrieb der Klimaanlage 10 sowie einen besonders hohen Komfort für sich im Innenraum aufhaltende Insassen zu realisieren, wird die Klimaanlage 10 in einem Abtaubetrieb betrieben, in welchem der jeweilige Wärmetauscher 20 beziehungsweise 24 für sich betrachtet parallel als Kühleinrichtung zum Kühlen des Kältemittels und als Verdampfer zum Verdampfen des Kältemittels betrieben wird.

Aus Fig. 1 ist erkennbar, dass der jeweilige erste Wärmetauscher 20 einen ersten Teilbereich 26 aufweist, welcher in dem ersten Kältemittelkreislauf 12 angeordnet ist. Ferner weist der jeweilige Wärmetauscher 20 einen zweiten Teilbereich 28 auf, welcher in dem zweiten Kältemittelkreislauf 14 angeordnet ist. Ferner weist der jeweilige Wärmetauscher 24 einen ersten Teilbereich 30 auf, welcher in dem zweiten Kältemittelkreislauf 14 angeordnet ist. Darüber hinaus weist der jeweilige Wärmetauscher 24 einen zweiten Teilbereich 32 auf, welcher in dem ersten Kältemittelkreislauf 12 angeordnet ist. Somit strömt das Kältemittel in dem Kühlbetrieb durch den ersten Kältemittelkreislauf 12, jedoch nicht durch den zweiten Kältemittelkreislauf 14, sodass das Kältemittel in dem Kühlbetrieb durch den jeweiligen ersten Teilbereich 26 des jeweiligen Wärmetauschers 20 und durch den jeweiligen zweiten Teilbereich 32 des jeweiligen Wärmetauschers 24, nicht jedoch durch die jeweiligen Teilbereiche 28 und 30 strömt.

In dem Wärmepumpenbetrieb hingegen strömt das Kältemittel durch den zweiten Kältemittelkreislauf 14, nicht jedoch durch den ersten Kältemittelkreislauf 12, sodass das Kältemittel in dem Wärmepumpenbetrieb durch den jeweiligen zweiten Teilbereich 28 des jeweiligen Wärmetauschers 20 und durch den jeweiligen ersten Teilbereich 30 des jeweiligen Wärmetauschers 24, nicht jedoch durch die Teilbereiche 26 und 32 strömt. Dabei ist in dem ersten Kältemittelkreislauf 12 ein erstes, als Expansionsventil 34 ausgebildetes Expansionselement zum Expandieren des Kältemittels angeordnet. Ferner ist in dem zweiten Kältemittelkreislauf 14 ein zweites, als Expansionsventil 36 ausgebildetes Expansionselement zum Expandieren des Kältemittels angeordnet.
In dem Kühlbetrieb durchströmt das Kältemittel sequenziell beziehungsweise nacheinander zunächst beispielsweise den jeweiligen ersten Wärmetauscher 20, insbesondere dessen Teilbereich 26, dann das Expansionsventil 34, dann den jeweiligen zweiten Wärmetauscher 24, insbesondere dessen Teilbereich 32 und dann den Verdichter 16, woraufhin das Kältemittel wieder durch den jeweiligen ersten Wärmetauscher 20 beziehungsweise dessen Teilbereich 26 strömt. Somit durchströmt das Kältemittel in dem Kühlbetrieb durch die jeweiligen Wärmetauscher 20 und 24 nacheinander gemäß einer ersten Reihenfolge, gemäß welcher das Kältemittel zuerst durch den Wärmetauscher 20, insbesondere durch den Teilbereich 26, und danach durch den Wärmetauscher 24, insbesondere den Teilbereich 32, strömt.

In dem Wärmepumpenbetrieb strömt das Kältemittel sequenziell, das heißt nacheinander zunächst beispielsweise durch den jeweiligen zweiten Wärmetauscher 24, insbesondere durch dessen Teilbereich 30, dann durch das Expansionsventil 36, dann durch den jeweiligen ersten Wärmetauscher 20, insbesondere dessen Teilbereich 28, und dann durch den Verdichter 16, woraufhin das Kältemittel wieder zu dem jeweiligen zweiten Wärmetauscher 24 beziehungsweise dessen Teilbereich 30 strömen kann. Somit durchströmt das Kältemittel in dem Wärmepumpenbetrieb die jeweiligen Wärmetauscher 20 und 24 nacheinander gemäß einer zweiten Reihenfolge, welche umgekehrt zur ersten Reihenfolge ist, sodass das Kältemittel im Wärmepumpenbetrieb zunächst durch den Wärmetauscher 24 beziehungsweise den Teilbereich 30 und dann durch den Wärmetauscher 20 beziehungsweise dessen Teilbereich 28 strömt. Diese Umkehrung der Reihenfolge erfolgt beispielsweise mittels einer Ventileinrichtung 38, welche in dem Kühlbetrieb den ersten Kältemittelkreislauf 12 freigibt und den zweiten Kältemittelkreislauf 14 versperrt. In dem Wärmepumpenbetrieb gibt die Ventileinrichtung 38 beispielsweise den zweiten Kältemittelkreislauf 14 frei und sperrt den ersten Kältemittelkreislauf 12. Somit kann die Reihenfolge umgedreht werden, ohne dass der Verdichter 16 hinsichtlich seiner Förderrichtung umgekehrt werden muss. Insgesamt ist somit erkennbar, dass der Kältemittelkreislauf 12 zum Kühlen und der Kältemittelkreislauf 14 zum Heizen verwendet wird.

In dem Abtaubetrieb ist ein Parallelbetrieb der beiden Kältemittelkreisläufe 12 und 14 vorgesehen, sodass beide Kältemittelkreisläufe 12 und 14 parallel von dem Kältemittel durchströmt werden. Somit gibt die Ventileinrichtung 38 in dem Abtaubetrieb beide Kältemittelkreisläufe 12 und 14 für das Kältemittel frei. Dabei arbeiten die Wärmetauscher 20 und 24 jeweils parallel als Kühleinrichtung und als Verdampfer, um dadurch beispielsweise einer aus dem Wärmepumpenbetrieb resultierenden Vereisung des jeweiligen ersten Wärmetauschers 20 entgegenzuwirken. Dies bedeutet, dass in dem Abtauvorgang der erste Wärmetauscher 20 hinreichend erwärmt werden kann, um beispielsweise Eis, welches sich an dem ersten Wärmetauscher 20 niedergesetzt hat, aufzuschmelzen. Somit kann in dem Abtaubetrieb eine hinreichende Erwärmung des jeweiligen ersten Wärmetauschers 20 bewirkt werden, wobei gleichzeitig eine übermäßige Ab- beziehungsweise Auskühlung des jeweiligen zweiten Wärmetauschers 24 vermieden werden kann.

Erfindungsgemäß ist vorgesehen, eine unterschiedliche Verteilung von Massenströmen des Kältemittels auf die beiden Kältemittelkreisläufe 12 und 14, insbesondere mittels der Ventileinrichtung 38, einzustellen. Somit ist es vorgesehen, dass während des Abtaubetriebs das Kältemittel mit einem ersten Massenstrom durch den Kältemittelkreislauf 12 und mit einem gegenüber dem ersten Massenstrom unterschiedlichen, zweiten Massenstrom durch den Kältemittelkreislauf 14 strömt. Diese unterschiedlichen Massenströme des Kältemittels sind beispielsweise über unterschiedliche Ventilöffnungsgrade und/oder unterschiedliche Ventilöffnungszeiten, insbesondere der Ventileinrichtung 38, realisierbar.

## Patentansprüche

1. Verfahren zum Betreiben einer in einem Wärmepumpenbetrieb als Wärmepumpe zum Beheizen eines Innenraums eines Fahrzeugs und in einem Kühlbetrieb als Kältemaschine zum Kühlen des Innenraums betreibbaren Klimaanlage (10), welche einen Verdichter (16), mittels welchem ein Kältemittel in dem Wärmepumpenbetrieb und in dem Kühlbetrieb verdichtet wird, wenigstens einen ersten Wärmetauscher (20), welcher in dem Wärmepumpenbetrieb als Verdampfer zum Verdampfen des Kältemittels und in dem Kühlbetrieb als Kühleinrichtung zum Kühlen des Kältemittels betrieben wird, und wenigstens einen zweiten Wärmetauscher (24) aufweist, welcher in dem Wärmepumpenbetrieb als Kühleinrichtung zum Kühlen des Kältemittels und in dem Kühlbetrieb als Verdampfer zum Verdampfen des Kältemittels betrieben wird, wobei die Klimaanlage (10) in einem Abtaubetrieb betrieben wird, in welchem der jeweilige Wärmetauscher (20, 24) parallel als Kühleinrichtung zum Kühlen des Kältemittels und als Verdampfer zum Verdampfen des Kältemittels betrieben wird, wobei das Kältemittel in dem Abtaubetrieb zumindest einen jeweiligen ersten Teilbereich (26, 30) und zumindest einen jeweiligen zweiten Teilbereich (28, 32) des jeweiligen Wärmetauschers (20, 24) durchströmt, wobei der jeweilige erste Teilbereich (26, 30) in dem Abtaubetrieb als Kühleinrichtung zum Kühlen des Kältemittels betrieben wird, und wobei der jeweilige zweite Teilbereich (28, 32) in dem Abtaubetrieb als Verdampfer zum Verdampfen des Kältemittels parallel zu dem jeweiligen ersten Teilbereich (26, 30) betrieben wird,
**dadurch gekennzeichnet, dass**
in dem Abtaubetrieb das Kältemittel den ersten Teilbereich (26) des ersten Wärmetauschers (20) und den zweiten Teilbereich (32) des zweiten Wärmetauschers (24) mit einem ersten Massenstrom und den zweiten Teilbereich (28) des ersten Wärmetauschers (20) und den ersten Teilbereich (30) des zweiten Wärmetauschers (24) mit einem von dem ersten Massenstrom unterschiedlichen zweiten Massenstrom durchströmt

2. Verfahren nach Anspruch 1,
**dadurch gekennzeichnet, dass**
die ersten Teilbereiche (26, 30) mittels desselben Verdichters (16) mit dem verdichteten Kältemittel versorgt werden.

## Claims

1. Method for operating an air conditioning system (10), which can be operated as a heat pump for heating an interior of a vehicle in a heat pump mode and as a refrigeration machine for cooling the interior in a cooling mode, the air conditioning system (10) having a compressor (16) by means of which a refrigerant is compressed in the heat pump mode and in the cooling mode, at least one first heat exchanger (20) operated in the heat pump mode as an evaporator for evaporating the refrigerant and in the cooling mode as a cooling device for cooling the refrigerant, and at least one second heat exchanger (24) operated in the heat pump mode as a cooling device for cooling the refrigerant and in the cooling mode as an evaporator for evaporating the refrigerant, wherein the air conditioning system (10) is operated in a defrosting mode in which the respective heat exchanger (20, 24) is operated in parallel as a cooling device for cooling the refrigerant and as an evaporator for evaporating the refrigerant, wherein the refrigerant flows in the defrosting mode through at least one respective first sub-region (26, 30) and through at least one second sub-region (28, 32) of the respective heat exchanger (20, 24), wherein the respective first sub-region (26, 30) is operated as a cooling device for cooling the refrigerant in the defrosting mode, and wherein the respective second sub-region (28, 32) is operated in parallel to the respective first sub-region (26, 30) as an evaporator for evaporating the refrigerant,
**characterised in that**
the refrigerant flows in the defrosting mode through the first sub-region (26) of the first heat exchanger (20) and through the second sub-region (32) of the second heat exchanger (24) with a first mass flow and through the second sub-region (28) of the first heat exchanger (20) and through the first sub-region (30) of the second heat exchanger (24) with a second mass flow which is different from the first mass flow.

2. Method according to claim 1,
**characterised in that**
the first sub-regions (26, 30) are supplied with the compressed refrigerant by means of the same compressor (16).

## Revendications

1. Procédé d'opération d'une climatisation (10) pouvant être opérée dans une opération de pompe à chaleur en tant que pompe à chaleur pour le chauffage d'un habitacle d'un véhicule et dans une opération de refroidissement en tant que machine frigorifique pour le refroidissement de l'habitacle, laquelle présente un compresseur (16) au moyen duquel un réfrigérant est compressé dans l'opération de pompe à chaleur et dans l'opération de refroidissement, au moins un premier échangeur de chaleur (20) qui est opéré dans l'opération de pompe à chaleur en tant qu'évaporateur pour l'évaporation du réfrigérant et dans l'opération de refroidissement en tant que dispositif de refroidissement pour le refroidissement du réfrigérant, et au moins un second échangeur de chaleur (24) qui est opéré dans l'opération de pompe à chaleur en tant que dispositif de refroidissement pour le refroidissement du réfrigérant et dans l'opération de refroidissement en tant qu'évaporateur pour l'évaporation du réfrigérant, dans lequel la climatisation (10) est opérée dans une opération de dégivrage dans laquelle l'échangeur de chaleur respectif (20, 24) est opéré parallèlement en tant que dispositif de refroidissement pour le refroidissement du réfrigérant et en tant qu'évaporateur pour l'évaporation du réfrigérant, dans lequel le réfrigérant parcourt dans l'opération de dégivrage au moins une première région partielle respective (26, 30) et au moins une seconde région partielle respective (28, 32) de l'échangeur de chaleur respectif (20, 24), dans lequel la première région partielle respective (26, 30) est opérée dans l'opération de dégivrage en tant que dispositif de refroidissement pour le refroidissement du réfrigérant, et dans lequel la seconde région partielle respective (28, 32) est opérée dans l'opération de dégivrage en tant qu'évaporateur pour l'évaporation du réfrigérant parallèlement à la première région partielle respective (26, 30), **caractérisé en ce que**
le réfrigérant parcourt dans l'opération de dégivrage la première région partielle (26) du premier échangeur de chaleur (20) et la seconde région partielle (32) du second échangeur de chaleur (24) avec un premier courant massique, et la seconde région partielle (28) du premier échangeur de chaleur (20) et la première région partielle (30) du second échangeur de chaleur (24) avec un second courant massique différent du premier courant massique.

2. Procédé selon la revendication 1,
**caractérisé en ce que**
les premières régions partielles (26, 30) sont alimentées en le réfrigérant compressé au moyen du même compresseur (16).
